# EUROPEAN PATENT SPECIFICATION

(11) **EP 2 505 858 B1**
(45) Date of publication and mention of the grant of the patent: **04.11.2015**
(21) Application number: 12162427.4
(22) Date of filing: 30.03.2012
(51) Int. Cl.: F16C 11/06, F16C 23/04, F16C 33/74

(54) **Spherical bearing with sealing member, method of sealing a spherical bearing and steering assembly comprising said bearing**
Gelenklager mit Dichtung, Verfahren um ein Gelenklager abzudichten und Lenkanordnung mit einem solchen Gelenklager
Palier sphérique avec joint d'etanchéité, procedure pour étanchéifier un palier sphérique et assemblage de direction comprenant ledit palier sphérique

(30) Priority: 01.04.2011 US 201113078486
(43) Date of publication of application: 03.10.2012
(73) Proprietor: Roller Bearing Company of America, Inc., Oxford, CT 06478 (US)
(72) Inventor: Henn, Andrew, Monroe, CT Connecticut 06468 (US); Harper, Marc D., Patterson, NY New York 12563 (US)
(74) Representative: Israelsson, Stefan

(56) References cited:
- EP-A1- 0 903 509
- DE-A1- 19 834 678
- FR-A- 1 488 848
- US-A- 4 052 804
- US-A- 4 109 976
- US-A- 5 573 336

## Description

### Field

The present invention relates generally to the field of spherical bearings. More specifically, the present invention relates to the field of self-lubricating spherical bearings.

A sealed spherical bearing, according to the preamble of claim 1, is known from US 4 109 976 A.

### Background

Wear occurs on surfaces which are in sliding contact with one another. High loads can accelerate the rate at which wear occurs. Traditional bearings have metal-on-metal sliding surfaces. Such metal-on-metal bearings require lubrication to reduce friction between the sliding surfaces. If the surface is not properly lubricated the bearing and any associated machinery can be irreparably damaged.

It is known to treat sliding surfaces with a low friction application to reduce friction between the sliding surfaces. A sliding surface treated with a low friction application may be referred to as a self-lubricating surface. Known low friction applications include, but are not limited to, rubber, ceramic, fabric, and resins with lubricant fillers such as polytetrafluoroethylene (PTFE), graphite, and a molybdenum sulfide.

It is further known to use such low friction treatment with spherical bearings. Spherical plain bearings typically have a steel alloy or ceramic ball positioned in a steel alloy race. The race defines an inner surface contoured to receive the spherical ball therein. A lubricant, such as grease, is typically provided between the spherical ball and race to reduce friction during operation. To reduce the need for lubrication, or in lieu of using a lubricant, it is known to apply a low friction treatment to one or more of the bearing surface and or the contoured inner surface of the race.

Despite recent improvements in this technology, many self-lubricating bearings experience ingress of contaminants that degrade the bearing and the self-lubricating coating compositions. Common contaminants may include sand, mud, and particulate contamination. The contaminants enter the bearing between the race and the ball and degrade the sliding surface between the race and the ball.

This problem is especially prevalent for heavy load vehicles used in harsh environments, such as military equipment, construction vehicles, hauling vehicles, mining equipment, and fire trucks. Contamination of the coating composition leads to a rapid increase in the wear rate of the bearing and, in turn, decreases the life of the bearing. Accordingly, a self-lubricating bearing capable of inhibiting contamination of the self coating composition, while maintaining the integrity and usefulness of the bearing is needed.

### SUMMARY

One embodiment of the present invention relates to a sealed spherical bearing according to claim 1 and a method of manufacturing the same according to claim 5.

It should be understood that the terms ball, spherical ball, spherical surface, and the like may include objects in which only a portion of object is contoured, and may further include objects in which the contoured surface has a non-uniform radius of curvature.

In some embodiments of the present invention a housing is provided. For example, the housing may be part of a larger system such as a steering or suspension system. The bearing may be installed in the housing. In the present invention the installation of the seal and its configuration is independent of the housing because the seal is secured to a retainer which in turn is press fit into the first annular channel defmed by the race. Neither the seal nor the retainer is directly fixed to the housing. Instead, an outer surface of the race is in direct contact with the housing. This design is advantageous because such spherical bearings are installable in the housing without the need to fixedly attach the seal or the retainer to the housing.

The sealed spherical bearing also includes a second annular groove defined by the ball. A second edge of the seal is seated in the second annular groove. In some embodiments the second edge of the seal and the second annular groove form an interference fit. The second edge of the seal comprises a bulbous protrusion to further inhibit the flow of contaminants between second edge of the seal and the second annular groove.

In the present invention, a wall defining the at least a portion of the second annular groove further defines a lip to further prevent contaminants from passing between the second edge of the seal and an inside surface of the second annular groove.

In yet further embodiments of the present invention, a lubricant is disposed on one or more of the inside surface of the second annular groove and the second edge of the seal to reduce friction generated between the second edge of the seal and the inside of the second annular groove during a rotation of the ball relative to the race. In yet further embodiments of the present invention, a cavity is formed by the race, the seal, and the ball, and a lubricant is disposed therein. In yet further embodiments of the present invention a sealed spherical bearing is incorporated into a steering system. In yet further embodiments the sealed spherical bearing is incorporated into a suspension system.

### BRIEF DESCRIPTION OF THE DRAWINGS

FIG. 1 is a cross sectional view of a sealed spherical bearing in accordance with one embodiment of the present invention.
FIG. 2 is a cross sectional view of a portion of the sealed spherical bearing shown in FIG. 1.
FIG. 3A is a cross sectional view of a portion of the sealed spherical bearing shown in FIG 1.
FIG. 3B is a cross sectional view of a sealed spherical bearing in accordance with one embodiment of the present invention.
FIG. 4 is a graphical representation of a test performed using a sealed spherical bearing in accordance with one embodiment of the present invention.
FIG. 5 is a schematic illustration of sealed spherical bearings installed in a steering system.
FIG. 6 is a cross sectional view of a portion of a sealed spherical bearing in accordance with one embodiment of the present invention.

### DETAILED DESCRIPTION

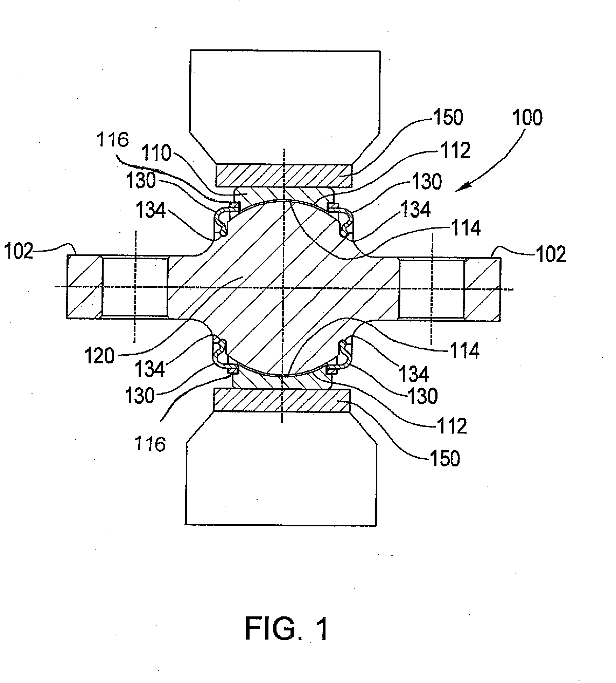

In reference to FIGS. 1-3, a bearing 100 in accordance with one embodiment of the present invention is shown. The bearing includes a race 110 and ball 120 disposed therein. The bearing may be received in a housing 150. It should be understood that term ball 120 as used in this application refers to a body adapted to be disposed in a race 110 wherein at least a portion of the body is spherical. The race 110 defines an inner surface 112. The inner surface 112 is contoured to receive a convex contoured surface of the ball 120. The ball 120 and the race 110 are rotatable and/or misalignable relative to each other. A shaft 102 extends from opposing sides of the ball 120.

The ball 120 may be made from a steel or a steel alloy. For example, the inner member may be made from AISI 52100, AISI 440C, 4340 or 4130 alloy steel, 17-4PH, 15-5PH, 13PH-8MO. It is also contemplated that the ball 120 may be made from other materials that are sufficiently hard or can be sufficiently hardened through heat treatment. The ball 120 may be chrome plated. As is more fully described below, a self-lubricating treatment may be applied to the contoured surface of the ball 120.

The race 110 may be made from a steel or a steel alloy, including, but not limited to, 4340, 4130, 17-4PH. 15-5PH, 13PH-8MO, or another suitable material. In some embodiments the material may have a lower hardness that allows the race 110 to be formed in a press operation around the ball 120, while still having adequate strength to handle forces during operation of the bearing 100. It is also contemplated that the race 110 may be made of a material that is a sufficient mating surface to a self-lubricating coating composition. The race 110 and the ball 120 may be made of the same or different materials. The housing 150 may also be made from a steel or a steel alloy. The housing 150 is adapted to receive a ball bearing 100.

As shown in FIG. 1, the ball 120 includes a spherically convex contoured surface 114 while the race 110 includes a spherically concave contoured surface 112. The race contoured surface 112 is in sliding disposition to the ball contoured surface 114. The ball 120 and the race 110 are rotatable and/or misalignable relative to each other.

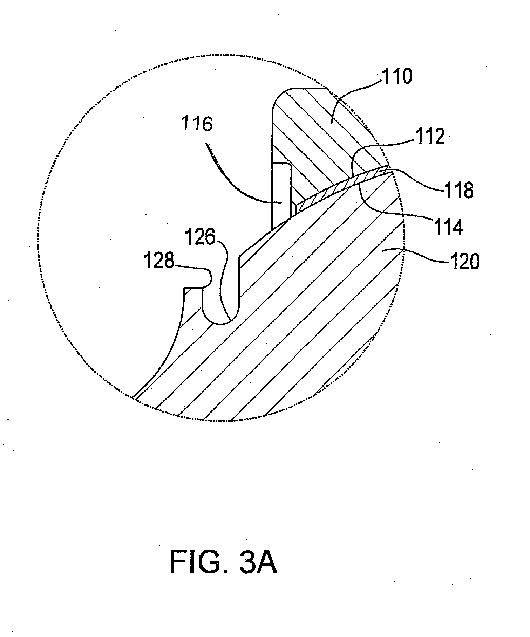

In reference to FIG. 3A the bearing 100 includes a self-lubricating treatment 118. The self lubricating treatment118 may be applied to one or more of the ball contoured surface 114 or the race contoured surface 112.

Prior to application of the self-lubricating treatment 118 one or more of the ball contoured surface 114 and the race contoured surface 112 are treated to achieve a desired surface finish. One or more of the ball contoured surface 114 or the race contoured surface 112 is grit-blasted to impose a desired roughness on the surface 112, 114. In one instance, grit-blasting is performed with twenty grit size aluminum oxide. However, it is contemplated that in other instances, different grit size and media, such as silicon carbide, may be used.

After achieving the desired surface finish one or more of the surfaces 112, 114, the surface(s) may be cleaned to remove grease and foreign debris. Any method of cleaning that is effective to remove grease and foreign debris may be employed. Methods of cleaning include, but are not limited to, alkaline cleaning, emulsion cleaning, solvent cleaning, vapor degreasing, acid cleaning, pickling, salt bath scaling, and the like. After cleaning the surface is dried and the self-lubricating treatment 118 is applied.

Suitable methods for depositing self-lubricating treatment 118 include, but are not limited to, spraying, spinning, dipping, injection, bonding, and any other methods effective. for depositing a coating on a surface. Once deposited the self-lubricating treatment 118 may be cured by any method effective to cure a coating composition on a surface and subsequently machined to particularly desired measurements.

In one embodiment, the self-lubricating treatment 118 is a fabric liner system that includes polytetrafluoroethylene (PTFE) fiber that is woven with other fabrics, such as, but not limited to, cotton, polyester, glass fiber, carbon fiber, nylon, aramid materials such as NOMEX^{®} and KEVLAR^{®} manufactured by DuPont. The fabric may then be set in a thermosetting resin. Examples of thermosetting resins include, but are not limited to, phenolic resins, polyester resins, epoxy resins, urethane resins, polyurethane resins, polyimide resins, and the like. In an alternative embodiment, the fabric liner system includes the woven PTFE fiber and chopped PTFE fibers in addition to the other fibers and resins listed above. In yet another embodiment, the fabric liner system includes only chopped PTFE fibers in addition to the other fibers and resins listed above and does not include the woven PTFE fiber.

In another embodiment, the bearing 100 could employ a molded or injected self-lubricating liner system that includes a thermosetting resin, such as a phenolic resin, a polyester resin, an epoxy resin, a urethane resin, a polyurethane resin, a polyimide resin, or the like, which is mixed with any one or a combination of the following fibers: PTFE, cotton, polyester, glass fiber, carbon fiber, nylon, or aramid fibers such as NOMEX^{®} and KEVLAR^{®}.

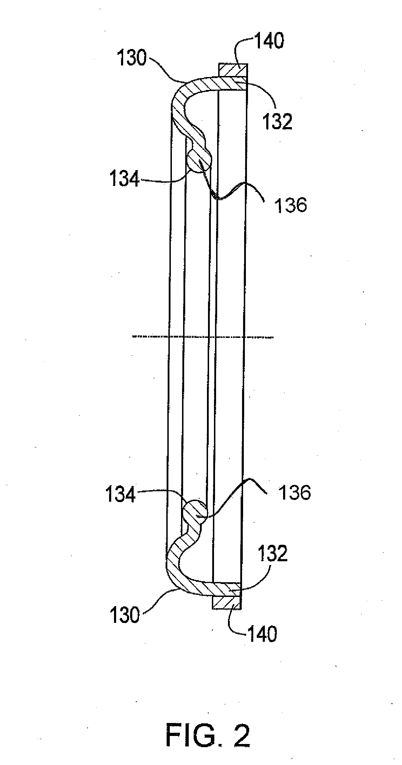

In reference to FIGS. 1 and 2, the bearing 100 includes a seal 130 located between the race 110 and the ball 120 to inhibit the ingress of contaminants into the bearing 100, and more specifically on the sliding surface formed by the race contoured surface 112 and the ball contoured surface 114. The seal 130 has a first edge 132 and a second edge 134. In the embodiments shown in FIGS. 1 and 2, the seal 130 forms a ring. It should be understood that the geometry of the seal 130 may vary depending on the geometry of the race 110, the ball 120, and the bearing 100 generally.

The seal 130 is secured to a retainer 140. The retainer 140 is used to engage the first edge 132 of the seal 130 in the race 110. The retainer 140 has a ring shape similar in diameter to the seal 130 as measured at the first edge 132. The first edge 132 of the seal 130 is secured to the retainer 140 using a bonding agent. In some embodiments, the first edge 132 of the seal 130 is secured to the retainer 140 with a press-fit. It should be understood that any known method for securing the first edge 132 of the seal 130 to the retainer 140 may be used.

In reference to FIG. 1, the seal 130 is located between the race 110 and the ball 120. The retainer 140 is press fit into a first annular groove 116 defined by the race 110. After the retainer 140 is press fit into the first annular groove 116, the retainer 140 and seal 130 secured thereto are fixed relative to the race 110. In reference to FIG. 3A, the first annular groove 116 is shown. The first annular groove 116 is sized to receive the retainer 140. In further reference to FIG. 1, the retainer 140 is press fit into the first annular groove 116 defined by the race 110. This provides an advantage over fixing the first edge 132 of the seal 130 to an external housing 150. This method eliminates the need to install the seal 130 into the housing 150 after the bearing 100 is installed in the housing 150.

In the embodiment shown in FIG. 1, the seal 130 is an elastomer. The seal 130 may be made from, for example, natural rubber, silicones, or other synthetic elastomer materials such as, for example, nitrile, silicone, urethane, polyurethane, and the like. The seal 130 is typically made from a material having a hardness value suitable for sealing and durability. The seal 130 may include a pleated section. The pleated section collapses and expands towards and away from the bearing 100 in response to the relative movement of the ball 120 and the race 110.

In the embodiment shown in FIG. 1, the retainer 140 is made from a steel. It should be understood that any known material may be used for the retainer 140 that allows the seal 130 to be secured thereto and that can be press-fit into the first annular groove 116. For example, the retainer 140 may comprise a low carbon steel, a 300 series stainless steel, a corrosion resistant steel, such as, for example, 17-4PH, 15-SPH, 17-7PH, and the like. The profile of the retainer 140 is not limited to one shape or configuration since it is contemplated that the profile of the retainer 140 can vary depending on the geometry of the bearing 100.

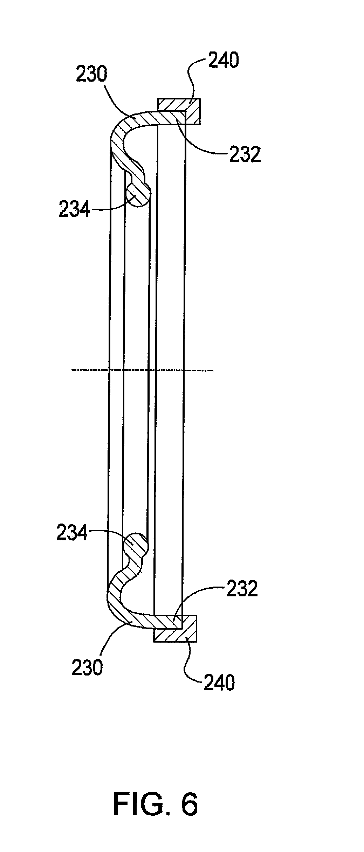

In reference to FIG. 6, a retainer 240 in accordance with one embodiment of the present invention is show. A seal 230 is secured to the retainer 240. The retainer 240 is used to engage the first edge 232 of the seal 230 in the race (not shown in FIG. 6). The retainer 240 has a ring shape similar in diameter to the seal 230 as measured at the first edge 232. In the embodiment shown, the retainer 240 is L-shaped in the cross-section view. A portion of the retainer extends radially inward. The first edge 232 of the seal 230 is secured to the retainer 240 using a bonding agent or a press-fit. The L-shaped retainer helps to ensure a more secure press-fit between the seal and the first groove.

In reference to FIG. 3A, the ball 120 defines a second annular groove 126. The second annular groove 126 extends along an outer circumference of the ball 120 about the axis of rotation of the ball 120 relative to the race 110. In reference to FIG. 1, the second edge 134 of the seal 130 is seated in the second annular groove 126. The second edge 134 and the second annular groove 126 form an interference fit. The second edge 134 comprises a bulbous protrusion 136. The bulbous protrusion, in part, helps to form the interference fit with the second annular groove 126. The a wall defining the second annular groove 126 further defines a lip 128. The lip 128 further serves to form the interference fit. In addition, the lip 128 maintains the second edge 134 of the seal 130 seated in the second annular groove 126. In some applications, the spherical bearing is subject to dynamic force loads causing the race 110 and seal 130 fixed relative thereto, to shift relative to the ball 120. The lip 128 maintains the seated position of the second edge 134 during such movements.

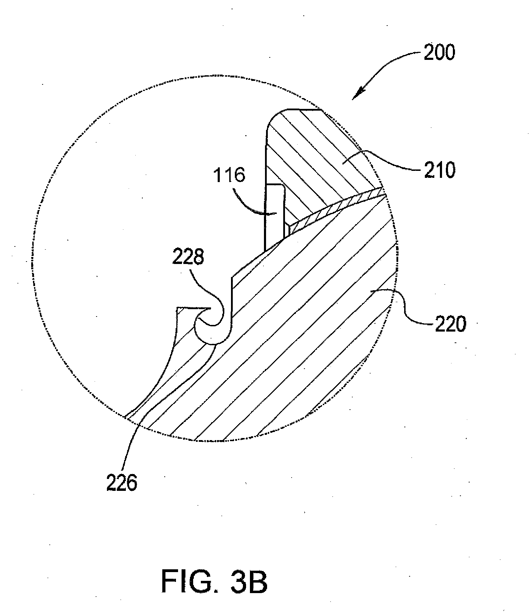

In reference to FIG. 3B, a spherical bearing 200 in accordance with one embodiment of the present invention is shown. The bearing 200 includes a race 210 and a ball 220. The ball 220 defines a second annular groove 226 and lip 228. The lip 228 closes an opening of the second annular groove 226. In this manner, the second edge of the seal having a bulbous protrusion is secured in the second annular groove 226 by the extending lip 228.

In reference to FIG. 1, a lubricant, such as a thin film of grease, is disposed on one or more of an inside surface of the second annular groove 126 and the second edge 134 of the seal 130 to reduce friction between the second edge 134 of the seal 130 and the inside surface of the second annular groove 126 during rotation of the ball 120 relative to the race 110. A cavity is formed by the race 110, the ball 120, and the seal 130. In some embodiments, a lubricant is further disposed in the cavity to further inhibit the ingress of contaminants between the race 110 and the ball 120.

The bearing 100 may be utilized in a variety of situations and applications, including, but not limited to, suspension systems and steering systems. In one embodiment, the bearing 100 may be utilized in a suspension system of a vehicle and particularly a military vehicle, such as, for example, a tank or transport vehicle. In another embodiment, the bearing 100 may be utilized in a steering system of a vehicle and particularly a military vehicle. The use of the bearing 100 is not limited in this regard as it is contemplated to also be acceptable for use in other applications, such as heavy duty equipment, for example, heavy duty pick-up trucks, dump trucks, fire trucks, mining and construction equipment and vehicles and the like.

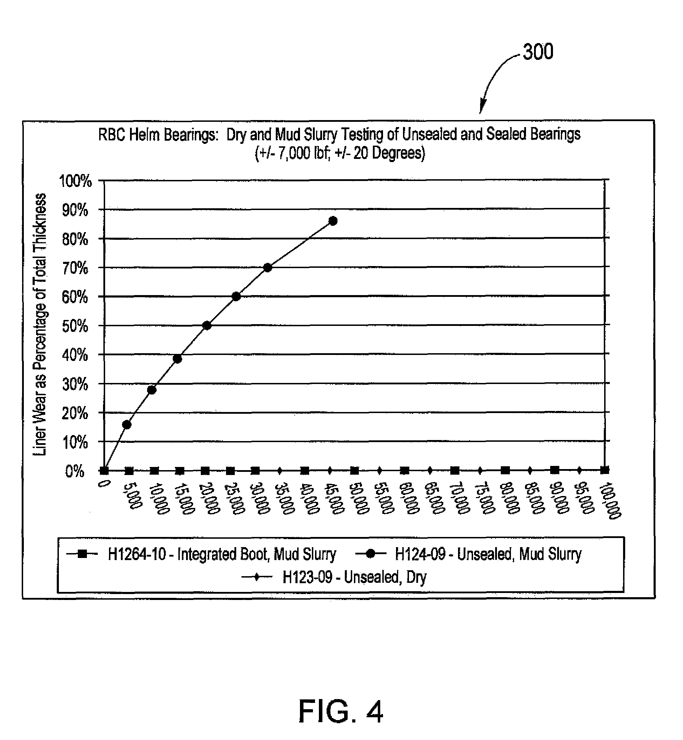

In reference to the chart 300 shown in FIG. 4, bench tests were performed with spherical bearings that utilized the above-described sealing member. Tests were conducted both dry (uncontaminated) and immersed in a mud slurry. Results in a mud slurry (contamination) with and without the sealing member show a dramatic difference in terms of performance. The integrated sealing member demonstrates performance levels that are very similar to the test without any contamination at all. Testing in a mud slurry under severe reversing load conditions with cyclic rotation of the bearing shows that the sealing member reduce the wear by 84%.

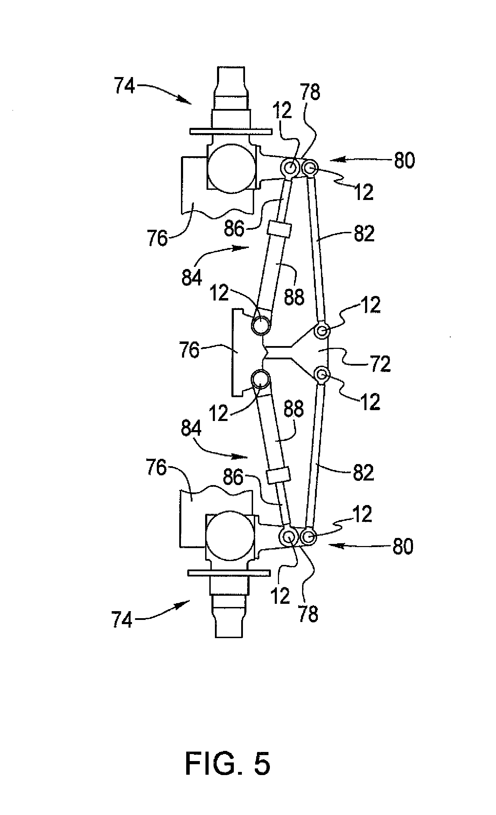

Referring to FIG. 5, a steering assembly is shown having a steering member 72 and two hubs 74, all pivotally coupled to separate locations on the frame 76. Each of the hubs 74 have a control arm 78 projecting therefrom. A distal end 80 of each of the control arms 78 is pivotally coupled to the steering member 72 by a tie rod 82. In addition, each of the hubs 74 have a piston 84 with one end pivotally coupled to a position adjacent the distal end 80 of the control arm 78 and an opposing end of the piston pivotally coupled to the frame 76. The pistons 84 each include a cylinder portion 86 slidingly disposed within a tube portion 88 so that the opposing ends can move towards and/or away from each other in response to forces applied thereto.

Each of the tie rods 82 and pistons 84 have the spherical bearing 12, described above, positioned in opposing ends thereof for providing the pivotal coupling with the frame 76, the control arm 78 and/or the steering member 72. The steering assembly described herein has utility, for example, in off-highway heavy haul trucks which operate in conditions subject to much contamination. Use of the spherical bearings 12 extend the useful life of the steering assembly of a heavy haul truck by improving lubrication and mitigating the potential for contaminants to enter the spherical bearing.

## Claims

1. A sealed spherical bearing (100) comprising:
a race (110);
a first annular groove (116) defined by the race (110);
a ball (120) disposed in the race, the ball and the race being rotatable relative to each other;
a second annular groove (126) defined by the ball (120);
wherein a wall defining at least a portion of the second annular groove (126) further defines a lip (128);
a ring-like seal (130) having a first edge (132);
wherein the seal comprises a second edge (134);
wherein the second edge (134) of the seal comprises a bulbous protrusion;
wherein the second edge (134) of the seal is seated in the second annular groove (126);
**characterised by**
a retainer (140), the retainer secured to the first edge (132) of the seal;
wherein the retainer (140) is press-fit into said first annular groove (116), so that the retainer (140) is fixed relative to the race (110).

2. The sealed spherical bearing of claim 1 further comprising:
a lubricant disposed on one or more of an inside of the second annular groove (126) and the second edge (134) of the seal (130) to reduce friction generated between the second edge (134) of the seal and the second annular groove (126) during a rotation of the ball (120) relative to the seal (130).

3. The sealed spherical bearing of claim 1 further comprising:
a lubricant disposed in a cavity formed by the race (110), the seal (130), and the ball (120).

4. The sealed spherical bearing of claim 1 in a combination with a housing (150), wherein the sealed spherical bearing is installed in said housing (150).

5. A method of sealing a spherical bearing (100) comprising the steps of:
providing a spherical bearing having a race (110) and a ball (120) disposed in the race, the ball and the race being rotatable relative to each other;
providing a ring-like seal (130) having a first edge (132);
providing a retainer (140);
securing the first edge (132) of the seal to the retainer (140);
press-fitting the retainer (140) into a first annular groove (116) defined by the race (110);
seating a second edge (134) of the seal in a second annular groove (126) defined by the ball (120);
wherein the second edge (134) of the seal comprises a bulbous protrusion; and
wherein a wall defining at least a portion of the second annular groove (126) further defines a lip (128).

6. The method of claim 5 further comprising the step of:
disposing a lubricant one or more of an inside of the second annular groove (126) and the second edge (134) of the seal (130) to reduce friction generated between the second edge (134) of the seal and the second annular groove (126) during a rotation of the ball (120) relative to the seal (130).

7. The method of claim 5 further comprising the step of:
disposing a lubricant in a cavity formed by the race (110), the seal (130), and the ball (120).

8. The method of claim 5 further comprising the step of:
applying a bonding agent to one or more of the first edge (132) of the seal (130) and the retainer (140) to fix the seal to the retainer.

9. The method of claim 5 further comprising the step of:
installing the bearing in a housing (150).

10. A steering assembly comprising:
a frame (76);
a steering member (72) and two hubs (74), all pivotally coupled to said frame (76), each of said hubs having a control arm (78) projecting therefrom, wherein a distal end (80) of each of said control arms is pivotally coupled to said steering member (72) by a respective tie rod (82) and each of said hubs (74) have a piston (84) with one end pivotally coupled to said control arm (78) and an opposing end pivotally coupled to said frame (76);
a sealed spherical bearing (12) according to any one of the claims 1-3 disposed in opposing ends of each of said tie rods (82) and said pistons (84), for providing the pivotal coupling with at least one of the frame (76), the control arm (78) and the steering member (72).

## Patentansprüche

1. Abgedichtetes Gelenklager (100), umfassend:
einen Laufring (110);
eine erste ringförmige Nut (116), die durch den Laufring (110) definiert wird;
eine Kugel (120), die in dem Laufring angeordnet ist, wobei die Kugel und der Laufring bezogen aufeinander drehbar sind;
eine zweite ringförmige Nut (126), die durch die Kugel (120) definiert wird;
wobei eine Wand, die wenigstens einen Abschnitt der zweiten ringförmigen Nut (126) definiert, weiterhin eine Lippe (128) definiert;
eine ringartige Dichtung (130) mit einem ersten Rand (132);
wobei die Dichtung einen zweiten Rand (134) umfasst;
wobei der zweite Rand (134) der Dichtung einen knollenförmigen Vorsprung umfasst;
wobei der zweite Rand (134) der Dichtung in der zweiten ringförmigen Nut (126) sitzt;
**gekennzeichnet durch**
ein Halteelement (140), wobei das Halteelement am ersten Rand (132) der Dichtung befestigt ist;
wobei das Halteelement (140) in die erste ringförmige Nut (116) presseingepasst ist, so dass das Halteelement (140) bezogen auf den Laufring (110) fixiert ist.

2. Abgedichtetes Gelenklager nach Anspruch 1, weiterhin umfassend:
ein Schmiermittel, das auf einer Innenseite der zweiten ringförmigen Nut (126) und/oder dem zweiten Rand (134) der Dichtung (130) angeordnet ist, um Reibung zu vermindern, die während einer Drehung der Kugel (120) bezogen auf die Dichtung (130) zwischen dem zweiten Rand (134) der Dichtung und der zweiten ringförmigen Nut (126) erzeugt wird.

3. Abgedichtetes Gelenklager nach Anspruch 1, weiterhin umfassend:
ein Schmiermittel, das in einem Hohlraum angeordnet ist, der durch den Laufring (110), die Dichtung (130) und die Kugel (120) ausgebildet wird.

4. Abgedichtetes Gelenklager nach Anspruch 1 in einer Kombination mit einem Gehäuse (150), wobei das abgedichtete Gelenklager in dem Gehäuse (150) eingebaut ist.

5. Verfahren zum Abdichten eines Gelenklagers (100), das folgende Schritte umfasst:
Bereitstellen eines Gelenklagers mit einem Laufring (110) und einer Kugel (120), die in dem Laufring angeordnet ist, wobei die Kugel und der Laufring bezogen aufeinander drehbar sind;
Bereitstellen einer ringartigen Dichtung (130) mit einem ersten Rand (132);
Bereitstellen eines Halteelements (140);
Befestigen des ersten Rands (132) der Dichtung an dem Halteelement (140);
Presseinpassen des Halteelements (140) in eine erste ringförmige Nut (116), die durch den Laufring (110) definiert wird;
Einsetzen eines zweiten Rands (134) der Dichtung in eine zweite ringförmige Nut (126), die durch die Kugel (120) definiert wird;
wobei der zweite Rand (134) der Dichtung einen knollenförmigen Vorsprung umfasst; und
wobei eine Wand, die wenigstens einen Abschnitt der zweiten ringförmigen Nut (126) definiert, weiterhin eine Lippe (128) definiert.

6. Verfahren nach Anspruch 5, das weiterhin folgenden Schritt umfasst:
Anordnen eines Schmiermittel auf einer Innenseite der zweiten ringförmigen Nut (126) und/oder dem zweiten Rand (134) der Dichtung (130), um Reibung zu vermindern, die während einer Drehung der Kugel (120) bezogen auf die Dichtung (130) zwischen dem zweiten Rand (134) der Dichtung und der zweiten ringförmigen Nut (126) erzeugt wird.

7. Verfahren nach Anspruch 5, das weiterhin folgenden Schritt umfasst:
Anordnen eines Schmiermittels in einem Hohlraum, der durch den Laufring (110), die Dichtung (130) und die Kugel (120) ausgebildet wird.

8. Verfahren nach Anspruch 5, das weiterhin folgenden Schritt umfasst:
Aufbringen eines Klebstoffs auf den ersten Rand (132) der Dichtung (130) und/oder das Halteelement (140), um die Dichtung an dem Halteelement zu fixieren.

9. Verfahren nach Anspruch 5, das weiterhin folgenden Schritt umfasst:
Einbauen des Lagers in einem Gehäuse (150).

10. Lenkanordnung, umfassend:
einen Rahmen (76);
ein Lenkelement (72) und zwei Naben (74), die alle verschwenkbar mit dem Rahmen (76) gekoppelt sind, wobei jede der Naben einen davon abstehenden Steuerarm (78) aufweist, wobei ein distales Ende (80) jedes der Steuerarme durch eine jeweilige Lenkstange (82) verschwenkbar mit dem Lenkelement (72) gekoppelt ist und jede der Naben (74) einen Kolben (84) aufweist, dessen eines Ende verschwenkbar mit dem Steuerarm (78) gekoppelt ist und dessen entgegengesetztes Ende verschwenkbar mit dem Rahmen (76) gekoppelt ist;
ein abgedichtetes Gelenklager (12) nach einem der Ansprüche 1-3, das in entgegengesetzten Enden jeder der Lenkstangen (82) und der Kolben (84) angeordnet ist, zum Bereitstellen der verschwenkbaren Kopplung mit dem Rahmen (76), dem Steuerarm (78) und/oder dem Lenkelement (72).

## Revendications

1. Roulement à rotule étanche (100), comprenant :
une bague de roulement (110) ;
une première rainure annulaire (116) définie par la bague de roulement (110) ;
une rotule (120) disposée dans la bague de roulement, la rotule et la bague de roulement étant rotatives l'une par rapport à l'autre ;
une seconde rainure annulaire (126) définie par la rotule (120) ;
dans lequel une paroi définissant au moins une portion de la seconde rainure annulaire (126) définit en outre une lèvre (128) ;
un joint d'étanchéité en forme de bague (130) comportant un premier bord (132) ;
dans lequel le joint d'étanchéité comprend un second bord (134) ;
dans lequel le second bord (134) du joint d'étanchéité comprend une protubérance bulbeuse ;
dans lequel le second bord (134) du joint d'étanchéité est assis dans la seconde rainure annulaire (126) ;
**caractérisé par**
un élément de retenue (140), l'élément de retenue étant fixé au premier bord (132) du joint d'étanchéité ;
dans lequel l'élément de retenue (140) est ajusté à la presse dans ladite première rainure annulaire (116), pour que l'élément de retenue (140) soit fixe par rapport à la bague de roulement (110).

2. Roulement à rotule étanche selon la revendication 1, comprenant en outre :
un lubrifiant disposé sur un ou plusieurs parmi un intérieur de la seconde rainure annulaire (126) et le second bord (134) du joint d'étanchéité (130) pour réduire le frottement généré entre le second bord (134) du joint d'étanchéité et la seconde rainure annulaire (126) durant une rotation de la rotule (120) par rapport au joint d'étanchéité (130).

3. Roulement à rotule étanche selon la revendication 1, comprenant en outre :
un lubrifiant disposé dans une cavité formée par la bague de roulement (110), le joint d'étanchéité (130), et la rotule (120).

4. Roulement à rotule étanche selon la revendication 1, en association avec un logement (150), dans lequel le roulement à rotule étanche est installé dans ledit logement (150).

5. Procédé d'étanchéisation d'un roulement à rotule (100), comprenant les étapes de :
la fourniture d'un roulement à rotule comportant une bague de roulement (110) et une rotule (120) disposée dans la bague de roulement, la rotule et la bague de roulement étant rotatives l'une par rapport à l'autre ;
la fourniture d'un joint d'étanchéité en forme de bague (130) comportant un premier bord (132);
la fourniture d'un élément de retenue (140) ;
la fixation du premier bord (132) du joint d'étanchéité à l'élément de retenue (140) ;
l'ajustement à la presse de l'élément de retenue (140) dans une première rainure annulaire (116) définie par la bague de roulement (110);
le placement d'un second bord (134) du joint d'étanchéité dans une seconde rainure annulaire (126) définie par la rotule (120) ;
dans lequel le second bord (134) du joint d'étanchéité comprend une protubérance bulbeuse ; et dans lequel une paroi définissant au moins une portion de la seconde rainure annulaire (126) définit en outre une lèvre (128).

6. Procédé selon la revendication 5, comprenant en outre l'étape de :
la pose d'un lubrifiant dans un ou plusieurs parmi un intérieur de la seconde rainure annulaire (126) et le second bord (134) du joint d'étanchéité (130) pour réduire le frottement généré entre le second bord (134) du joint d'étanchéité et la seconde rainure annulaire (126) durant une rotation de la rotule (120) par rapport au joint d'étanchéité (130).

7. Procédé selon la revendication 5, comprenant en outre l'étape de :
la pose d'un lubrifiant dans une cavité formée par la bague de roulement (110), le joint d'étanchéité (130), et la rotule (120).

8. Procédé selon la revendication 5, comprenant en outre l'étape de :
l'application d'un agent liant sur un ou plusieurs parmi le premier bord (132) du joint d'étanchéité (130) et l'élément de retenue (140) pour fixer le joint d'étanchéité à l'élément de retenue.

9. Procédé selon la revendication 5, comprenant en outre l'étape de :
l'installation du roulement dans un logement (150).

10. Ensemble de direction, comprenant :
un cadre (76) ;
un élément de direction (72) et deux moyeux (74), tous accouplés de façon pivotante audit cadre (76), chacun desdits moyeux comportant un bras de commande (78) faisant saillie à partir de celui-ci, dans lequel une extrémité distale (80) de chacun desdits bras de commandes est accouplée de façon pivotante audit élément de direction (72) par une biellette respective (82) et chacun desdits moyeux (74) comporte un piston (84) avec une extrémité accouplée de façon pivotante audit bras de commande (78) et une extrémité opposée accouplée de façon pivotante audit cadre (76) ;
un roulement à rotule étanche (12) selon l'une quelconque des revendications 1 à 3 disposé dans des extrémités opposées de chacun desdites biellettes (82) et desdits pistons (84), pour fournir l'accouplement pivotant avec au moins un parmi le cadre (76), le bras de commande (78) et l'élément de direction (72).
